# EUROPÄISCHE PATENTSCHRIFT

(11) **EP 0 649 332 B1**
(45) Veröffentlichungstag und Bekanntmachung des Hinweises auf die Patenterteilung: **17.04.1996**
(21) Anmeldenummer: 93915824.2
(22) Anmeldetag: 07.07.1993
(51) Int. Cl.: B01D 39/14, B32B 5/22

(54) **MEHRLAGIGES, TEXTILES, GASDURCHLÄSSIGES FILTERMATERIAL GEGEN CHEMISCHE SCHADSTOFFE**
MULTILAYERED, GAS-PERMEABLE TEXTILE FILTERING MATERIAL AGAINST TOXIC CHEMICAL SUBSTANCES
MATERIAU TEXTILE PERMEABLE AUX GAZ A COUCHES MULTIPLES DE FILTRAGE DE SUBSTANCES CHIMIQUES TOXIQUES

(30) Priorität: 07.07.1992 DE 4222295; 27.03.1993 DE 4310110
(43) Veröffentlichungstag der Anmeldung: 26.04.1995
(73) Patentinhaber: Alfred Kärcher GmbH & Co., D-71364 Winnenden (DE)
(72) Erfinder: STELZMÜLLER, Helmut, D-73765 Neuhausen/Fildern (DE); TÖPFER, Hans-Joachim, D-71522 Backnang (DE); STÄBLER, Gerhard, D-71083 Herrenberg (DE); STOLL, Thomas, D-72555 Metzingen (DE)
(74) Vertreter: Hoeger, Stellrecht & Partner
(86) Internationale Anmeldenummer: EP9301759
(87) Internationale Veröffentlichungsnummer: WO9401198

(56) Entgegenhaltungen:
- DE-A- 2 500 470
- DE-B- 2 140 287

## Beschreibung

Die Erfindung betrifft ein mehrlagiges, textiles, gasdurchlässiges Filtermaterial gegen chemische Schadstoffe und insbesondere Filter- und Schutzmaterialien für die Herstellung von Flächenfiltern und Schutzanzügen für den zivilen und militärischen Bereich.

Bisher bekannte Filtermaterialien der eingangs beschriebenen Art weisen einen textilen Trägerstoff auf, auf dem über Klebemittelraster Adsorberkugeln, insbesondere Aktivkohlekugeln aufgeklebt sind, welche gegebenenfalls durch eine gasdurchlässige Schutzschicht vor einem vorzeitigen Abrieb geschützt werden (EP-B 0 090 073).

Ferner sind Filtermaterialien bekannt, bei denen auf den textilen Trägern mit einem Kleberaster ein aktivierte Kohlenstofffasern enthaltendes Gewebe aufgeklebt ist. Laminiert man solche aktivierte Kohlenstoffasern enthaltende Gewebe zwischen zwei textile Lagen, so erhält man nach der EP-A-0 230 097 lediglich ein Material, bei welchem bereits bei geringster Zugbeanspruchung das die aktivierten Kohlenstoffasern enthaltende Gewebe zu feinem Staub zerfällt.

Nachteilig beim Stand der Technik ist, daß die Verheftung des textilen Trägerstoffes mit dem aktivierten Kohlenstoffmaterial unzureichend ist und darüberhinaus die eigentliche Adsorptionsschicht, die den aktivierten Kohlenstoff enthält, einer mechanischen Belastung, wie sie beispielsweise beim Tragen von Schutzanzügen aus dem Schutzmaterial vorkommt, nur ungenügend widersteht.

Aufgabe der Erfindung ist es, das in der EP-A-230 097 beschriebene Filtermaterial, welches eine erste Lage als textile Trägerschicht, eine mit der ersten Lage verbundene zweite Lage in Form einer Klebeschicht und eine auf die zweite Lage aufgebrachte und mit dieser verbundenen dritten Lage umfaßt, welche eine textile, aktivierte Kohlenstoffasern enthaltende Flächenschicht umfaßt, so weiterzuentwickeln, daß vorstehend genannte Nachteile vermieden werden.

Diese Aufgabe wird bei dem eingangs beschriebenen Filtermaterial erfindungsgemäß dadurch gelöst, daß die zweite Lage eine flächige Klebeschicht aus einem Klebefasergespinst, -vlies, -raster, einer Klebestoffolie, einem Klebstoffgewebe, -gewirke oder dergleichen oder eine auf die benachbarte (n) Lage (n) im Flammkaschierverfahren aufkaschierte offenporige Schaumstoffschicht ist und daß die zweite Lage mit der ersten und der dritten Lage flächig verbunden ist.

Diese dritte Lage kann von einer vierten Lage in Form einer flächigen Klebeschicht zusätzlich geschützt werden, welche auf der dritten Lage, gegenüberliegend zur zweiten Lage, aufgebracht und mit dieser flächig verbunden ist.

Obwohl bei den Klebeschichten extrem dünne Klebeschichten, insbesondere in Form von Gespinnsten, Vliesen, Folien etc., verwendet werden können, reicht insbesondere die vierte Lage als Klebeschicht aus, die dritte Lage mit der textilen, den aktivierten Kohlenstoff enthaltenden Flächenschicht zusätzlich zu stabilisieren und gegen Abrieb zu schützen. Erstaunlicherweise bietet die vierte Lage nicht nur eine ausreichende mechanische Schutzwirkung gegen Abrieb, sondern führt zusätzlich auch noch in Kooperation mit der zweiten Lage in Form einer flächen Klebeschicht zu einer Verfestigung der zwischen den beiden Lagen gehaltenen dritten Lage, so daß diese großenteils, unabhängig von ihrer eigenen mechanischen Stabilität, ganz im Hinblick auf ihre Schutzwirkung hin ausgewählt und in dem Schutzmaterial verwendet werden kann.

Ein besonders geeignetes Klebeschichtmaterial liegt bei geschlitzten Klebefilmfolien vor, die als eine Art trockener Schmelzkleber wirken.

Das Klebeschichtmaterial wird vorzugsweise aus einem thermoplastischen Kunststoff hergestellt, wobei hier insbesondere auf die Kunststoffe PVC, Polyurethan, Polyester und Polyamid hingewiesen werden kann. Wichtig bei den Klebeschichten ist, daß sie ausreichend gasdurchlässig sind, das heißt, daß die Folien insbesondere eine Perforierung, vorzugsweise eine Mikroperforierung, aufweisen, welche beim thermischen Verbinden bzw. beim thermischen Aktivieren der Klebeschicht im Verarbeitungsprozeß erhalten bleibt.

Neben den zuvor beschriebenen Klebeschichtmaterialien eignet sich besonders gut eine aufkaschierte offenporige Schaumstoffschicht, die neben der Kleberfunktion gleichzeitig durch die Schaumstruktur die Funktion einer Schutzschicht gegen mechanische Verletzungen der textilen, aktivierte Kohlenstoffasern enthaltenden Flächenschicht übernimmt. Für den Aufkaschiervorgang wird vorzugsweise ein Flammkaschierverfahren eingesetzt, wobei sich sehr genau die Dicke der beim fertigen Produkt verbleibenden Schichtdicke - und damit Schutzwirkung der Schaumstoffschicht - vorgeben läßt. Die Dicke der Schaumstoffschicht kann so gewählt werden, daß das flächige Filtermaterial in einem Nachbearbeitungsschritt unter Anwendung von Wärme und Druck bleibend verformbar ist.

Außerdem eignen sich retikulierte Schaumstoffmaterialien als Klebeschichtmaterialien, welche neben der Kleberfunktion außerdem, vor allem im Kontakt mit Flüssigkeiten, eine Filterfunktion ausüben. Eine mechanische Schutzwirkung bieten die retikulierten Schaumstoffmaterialien außerdem.

Bei Schutzmaterialien wird bevorzugt auf der außenliegenden Seite retikulierter Schaumstoff als Klebeschicht verwendet, während auf der Innenseite, also der der Haut zugewandten Seite, bevorzugt offenporiger Schaumstoff verwendet wird.

Erstmalig wird hier vorgeschlagen, das Flammkaschierverfahren bei der Herstellung von Textilien zu verwenden, die bei der Herstellung von Bekleidung eingesetzt werden.

Die textile Flächenschicht, welche die aktivierten Kohlenstofffasern enthält, kann prinzipiell nach unterschiedlichen Technologien gefertigt sein, beispielsweise entsprechend der Lehre der EP 0 079 488 B1, der EP 0 230 097 A2 oder auch der DE 33 25 644 C2.

Bei diesen Technologien handelt es sich um Gewebe, welche aktivierte Kohlenstoffstapelfasern umfassen, wobei in der zuerst genannten EP 0 079 488 Gewebe aus einem Mischgarn aus textilen Stapelfasern bekannt sind, welche einen Anteil an Aktivkohle-Stapelfasern enthalten, der zwischen 5 und 75 Gew.% liegt. Der Anteil der Stapelfasern, der nicht aus Aktivkohle-Stapelfasern besteht, ist hierbei im wesentlichen für die Stabilität des Mischgarnes bzw. des daraus gebildeten Gewebes verantwortlich.

Alternativ ist eine Verarbeitung gemäß der EP 0 230 097 A2 vorstellbar, wo aktivierte Kohlenstoffasern mit einem weiteren textilen Material vernadelt sind und damit eine Art flächige Filzlage bilden.

Die dritte hiervon verschiedene Art wird durch die DE 33 25 644 C2 gebildet, wo ein Spinngarn aus aktivierter Kohlenstoffaser verwendet wird.

Bei der zuletzt genannten Art von Faser bzw. textilem Flächenschichtmaterial ist die höchste Adsorptionsaktivität zu erwarten, wobei jedoch gleichzeitig darauf hinzuweisen ist, daß die mechanische Festigkeit dieser Art von Adsorberschicht gegenüber den beiden anderen geringer ausfällt.

Diese textile Flächenschicht mit den aktivierten Kohlenstofffasern kann als Gewebe, Filz, Gewirke, Vlies etc. vorgelegt werden. Wie bereits zuvor ausgeführt, ist es aufgrund des erfindungsgemäßen Aufbaus nicht notwendig, daß die textile Flächenschicht mit den aktivierten Kohlenstoffasern eine besondere mechanische Festigkeit aufweist, da ihr diese durch die sie gegebenenfalls beidseitig flächig deckenden Klebeschichten verliehen wird.

Die drei, vier oder mehr Lagen werden bei der Produktion zu einem Stapel zusammengeführt und passieren als Stapellage eine Heizzone, die vorzugsweise durch Heizwalzen gebildet wird. In der Heizzone wird der Klebstoff der zweiten und vierten (wenn vorhanden) Lage aktiviert und sorgt so für eine flächige Verbindung des Stapels.

Beim Flammkaschieren der Schaumstoffschichten wird zunächst die textile Trägerschicht mit einer Schaumstoffschicht kaschiert und nachfolgend in einem weiteren Kaschiervorgang auf diese Doppellage auf seiten der freien Schaumstoffschicht die textile, aktivierte Kohlenstoffasern enthaltende Flächenschicht aufkaschiert. Alternativ können aber auch die drei Lagen, nämlich die textile Trägerschicht, die Schaumstoffschicht und die Flächenschicht, gemeinsam verarbeitet werden und gleichzeitig in einem Verfahrensschritt zusammengeführt werden, wobei dann die beiden Kaschiervorgänge gleichzeitig ablaufen.

Je nach den beim Flammkaschieren gewählten Bedingungen läßt sich die Schaumstofflagendicke während eines Kaschiervorgangs gezielt reduzieren und somit dem Verwendungszweck des fertigen Filtermaterials in vielfacher Hinsicht anpassen, beispielsweise im Hinblick auf den Wärmedurchgangswert, Luftdurchlässigkeit, Schutzwirkung gegen mechanische Einwirkungen etc.

Schließlich kann bei einer bevorzugten Ausführungsform vorgesehen sein, daß eine fünfte Lage in Form eines mikroporösen, gasdurchlässigen, jedoch flüssigkeitsdichten Materials als weitere Schutzschicht vorgesehen ist. Diese kann im wesentlichen lose auf dem Stapel der Lagen eins bis vier aufliegen oder aber flächig mit der vierten Lage verbunden sein.

Vorzugsweise wird die textile Trägerschicht (erste Lage) aus einem luftdurchlässigen, reißfesten und dimensionsstabilen Material hergestellt. Die textile Trägerschicht kann somit die mechanischen Eigenschaften für das Filtermaterial insgesamt, insbesondere Reißfestigkeit und Dehnungsfestigkeit, definieren, wobei insbesondere die Dimensionsstabilität des Materials und ein entsprechend kleiner Wert der elastischen Dehnung des Materials sicherstellt, daß die zu schützende textile, aktivierte Kohlenstoffasern enthaltende Flächenschicht nicht über das zulässige Maß im Gebrauch der Filtermaterialien gedehnt wird.

Vorzugsweise weist im Hinblick auf diese gewünschten Eigenschaften die textile Trägerschicht eine Reißfestigkeit von > 300 N auf. Im Hinblick auf die elastische Dehnung ist gewünscht, daß die textile Trägerschicht einen Wert von < 12 % aufweist. Die üblichen Materialien, die zur Herstellung der textilen, aktivierte Kohlenstoffasern enthaltenden Flächenschichten zur Verfügung stehen, halten eine elastische Dehnung von < 12 % problemlos aus. Danach wirkt die elastische Dehnbarkeit der textilen Trägerschicht für die weitere Dehnung limitierend und verhindert so ein Zerreißen der textilen, aktivierte Kohlenstoffasern enthaltenden Flächenschicht innerhalb des Filtermaterials.

Die textile Trägerschicht, deren wesentliche Aufgabe zuvor in dem Verleihen einer Dimensionsstabilität und einer bestimmten Reißfestigkeit für das Filtermaterial liegt, kann mit einem sehr geringen Flächengewicht von beispielsweise 30 g/m² bis 150 g/m² ausgewählt sein, so daß es wenig zum Flächengewicht des Filtermaterials beiträgt, andererseits aber voll die oben definierten Funktionen erfüllt.

Die Gasdurchlässigkeit der textilen Trägerschicht, sofern diese nur in ihrer Trägerfunktion für das Filtermaterial von Bedeutung ist, sollte vorzugsweise zwischen 100 bis 500 l/(dm^{²}·min) betragen.

Soll das Filtermaterial als Schutzmaterial in Schutzkleidung Verwendung finden, ergeben sich Anwendungsfälle, wo die textile Trägerschicht bevorzugt aus einem Mikrofasergewebe hergestellt ist, welches zwar gasdurchlässig ist, jedoch vor Windbelastungen schützt. Hier ist dann die Gasdurchlässigkeit wesentlich geringer als zuvor definiert, nämlich bei ca. 10 bis 30 l/(dm²·min). Vorzugsweise weist die Trägerschicht dann gleichzeitig den Vorteil der Wasserdichtheit auf, und zwar bis zu einer Wassersäule von mindestens 500 mm, bevorzugt mindestens 1000 mm. Die Trägerschicht kann hier gleichzeitig als obere Schicht oder Abdeckschicht fungieren.

Das Mikrofasergewebe verhindert, daß Flüssigkeit bis zur aktivierte Kohlenstoffasern enthaltenden Flächenschicht vordringt, die aktivierten Kohlenstoffasern benetzt und damit die Aufnahmefähigkeit und Filterwirkung für Schadgase herabsetzt.

Die Schaumstoffschicht im fertigen Filtermaterial weist vorzugsweise eine Dicke von bis 0,7 mm auf, weiter bevorzugt im Bereich von ca. 0,3 mm bis ca. 0,5 mm.

Der Wärmeisolationswert des dreilagigen Filtermaterials liegt, insbesondere bei der Verwendung des Filtermaterials als Schutzmaterial für Schutzkleidung, vorzugsweise bei ≦ 70·10³ m² K/W. Auf die dritte Lage, die von der textilen, aktivierte Kohlenstoffasern enthaltenden Flächenschicht gebildet wird, kann mit einer vierten Lage in Form einer offenporigen Schaumstoffschicht als weitere, die Festigkeit des Filtermaterials und insbesondere der mechanischen Unempfindlichkeit der Flächenschicht verbessernde Lage versehen sein, die dann vorzugsweise ebenfalls per Flammkaschierung aufkaschiert ist. Bevorzugt wirkt in diesem Fall, daß die zweite Schaumstoffschicht zusammen mit einer zweiten textilen Lage aufkaschiert ist, so daß letztendlich ein sechslagiges Schichtmaterial erhalten wird. Die doppelt vorhandenen textilen Lagen und Schaumstoffschichten können entweder gleich oder verschieden voneinander sein, je nach Einsatzzweck des Filtermaterials.

Insbesondere können die Schaumstoffschichten eine unterschiedliche Dicke aufweisen, je nachdem, ob sie beispielsweise bei einem Schutzmaterial für Schutzbekleidung nach innen oder nach außen zu liegen kommen.

Bei einer bevorzugten Ausführungsform der Erfindung ist vorgesehen, daß die erste und/oder die zweite Schaumstoffschicht wärmeverformbar ist und nach dem Wärmeformschritt eine im wesentlichen selbsttragende Struktur für das Filtermaterial bildet. Damit können z.B. Filtermaterialien großer Oberfläche hergestellt werden, welche in der Schnittansicht eine Zick-Zack-Struktur aufweisen, oder es können Filtermaterialien mit einer bestimmten Form ausgebildet werden, die das Filtermaterial als kompletten Filtereinsatz in Filtergeräten geeignet machen.

Im folgenden wird die Erfindung anhand der Zeichnung noch näher erläutert. Es zeigen im einzelnen:
- Fig. 1: ein vierlagiges erfindungsgemäßes Filtermaterial;
- Fig. 1a: ein Verfahrensablaufdiagramm betreffend das Filtermaterial von Fig. 1;
- Fig. 2: ein sechslagiges erfindungsgemäßes Filtermaterial;
- Fig. 2a: ein Verfahrensablaufdiagramm betreffend das Filtermaterial von Fig. 2;
- Fig. 3: ein fünflagiges erfindungsgemäßes Filtermaterial; und
- Fig. 3a und 3b: Verfahrensablaufdiagramme betreffend das Filtermaterial von Fig. 3.

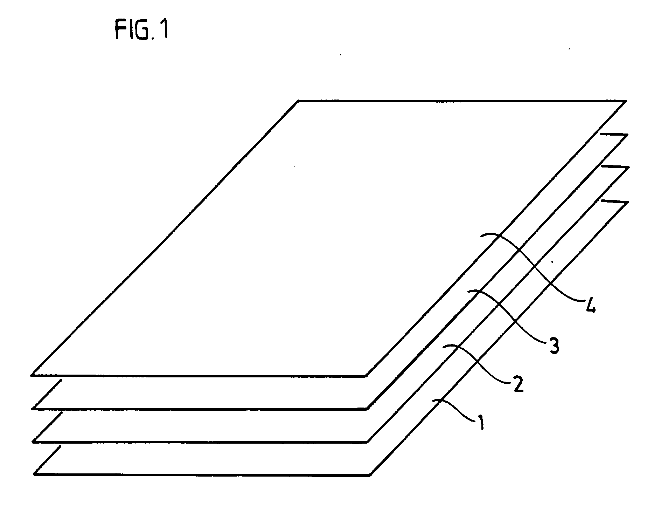

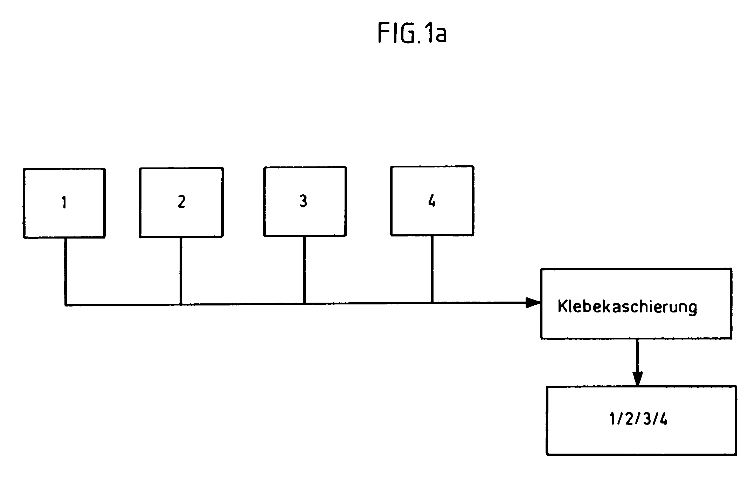

Figur 1 zeigt ein erfindungsgemäßes mehrlagiges textiles Filtermaterial, welches als Schutzmaterial in Schutzbekleidung verwendbar ist, wobei mit dem Bezugszeichen 1 eine erste, textile Lage als Trägerschicht bezeichnet ist, mit dem Bezugszeichen 2 eine mit der ersten Lage flächig verbundene zweite Lage in Form einer flächigen Klebeschicht, mit dem Bezugszeichen 3 eine auf der zweiten Lage aufgebrachte und mit dieser flächig verbundene dritte Lage, welche eine textile, aktivierte Kohlenstoffasern enthaltende Flächenschicht umfaßt, und mit dem Bezugszeichen 4 eine vierte Lage, welche ebenso wie die zweite Schicht 2 eine flächige Klebeschicht darstellt, welche auf der dritten Lage gegenüberliegend zur zweiten aufgetragen und mit dieser flächig verbunden ist.

Bevorzugt weist die Trägerschicht 1 eine Webstruktur auf, während die Klebeschichten 2 und 4 entweder aus einem relativ dichten Klebstoff-Fasergespinst, -Vlies, -Gewebe oder dergleichen hergestellt sind, dabei jedoch gasdurchlässig sind, oder aber in Form einer Folie vorgelegt werden, welche eine Perforation aufweisen, die auch nach dem Klebeprozeß im wesentlichen erhalten bleibt. Die dritte Lage 3 wird hier durch eine Adsorptionsschicht gebildet, welche aus einem Gewebe besteht, das aus einem Spinngarn aus aktivierter Kohlenstoffaser hergestellt ist, wie dies in der DE 33 25 644 C2 beschrieben ist.

Die als Deckschicht fungierende vierte Lage 4 wird wieder durch ein PU-Klebevlies oder -Klebefolie gebildet und kann aus demselben Material bestehen, wie die zweite Lage.

Als Folien eignen sich insbesondere auch solche Folien, welche in regelmäßiger Verteilung punktförmige Materialverdichtungen aufweisen.

Die Trägerschicht 1, vorwiegend ein Gewebe, Gewirke oder Gestrick, mit einem Flächengewicht von 50 bis 1000 g/m², vorzugsweise 100 bis 400 g/m², sollte eine Luftdurchlässigkeit von 10 bis 1000 l/min x 100 cm² aufweisen, hauptsächlich jedoch von 100 bis 400 l/min x 100 cm², gemessen bei 1 mbar Unterdruck.

Die Adsorptionsschicht 3 kann entweder aus Spinngarnen, die wiederum aus aktivierten Kohlestoffasern oder aus Filamentgarnen, die wiederum aus aktivierten Kohlestoffen bestehen können, hergestellt sein, oder aber die Adsorptionsschicht 3 wird in einem zweiten Arbeitsgang in einer Wasserdampfatmosphäre bei 800° C aktiviert.

Ebenso kann die Adsorptionsschicht 3 aus Spinnfasergarn aus kohlenstoffhaltigen Werkstoffen, insbesondere auf Basis von voroxidiertem Polyacrylnitril, entweder aus 100 % oder in Mischung mit einer anderen Spinnfaser vergleichbarer Länge gebildet werden. Das daraus erhaltene Mischgarn besteht zu 10 bis 90 Gew.% aus kohlestoffhaltigem Fasermaterial, vorwiegend 30 bis 70 Gew.%, und im übrigen aus textilen Spinnfasern, insbesondere aus Naturfasern oder Chemiefasern, die wiederum aus natürlichen Polymeren, organisch- oder anorganischer Basis oder synthetischen Werkstoffen bestehen können, insbesondere Baumwolle, Wolle, Seide, Polyamid, Polyester, Polyacryl, Aramide oder Viskose-Fasern. Die hierbei versponnenen Fasern liegen statistisch gesehen gleichmäßig verteilt im Garnkern vor. Diesen Fasern können entweder flammhemmende Substanzen zugesetzt sein oder aber sie können in einem zusätzlichen Ausrüstungsprozeß flammhemmend imprägniert werden. Diese Fasern haben vorzugsweise einen Feinheitsbereich von 0,4 bis 7 dtex, vorwiegend 0,8 bis 2 dtex, und eine Stapellänge von 10 bis 100 mm, vorwiegend von 30 bis 60 mm. Diese Fasern können entweder glatt oder gekräuselt sein.

Entweder wird die Faser aktiviert oder das Garn oder ein fertiges textiles Flächengebilde. Die spezifische Oberfläche der Adsorptionsschicht 3 sollte von 100 bis 2000 m²/g betragen, vorzugsweise 800 bis 1200 m²/g.

Die aus diesen Werkstoffen gesponnenen Garne können entweder nach klassischen Spinnverfahren, wie etwa dem Ringspinnverfahren, oder aber nach neueren Spinnverfahren, wie OE-Rotorspinnen, OE-Friktionsspinnen, Zwirnspinnen, Nitscheln (Selftwist), Umwindeverfahren, Falschdrahtverfahren, Verkleben/Verschweißen oder Verfilzen, hergestellt werden.

Figur 1a zeigt anhand eines Blockdiagramms einen bevorzugten Verfahrensablauf zur Herstellung des in Figur 1 gezeigten Filtermaterials. Dabei werden die einzelnen vier Lagen 1, 2, 3 und 4 zunächst zusammengeführt und als vierlagiger Stapel der Vorrichtung zum Klebekaschieren zugeführt. Als Ergebnis erhält man das mehrlagige, flächig miteinander verklebte Stapelmaterial 1/2/3/4.

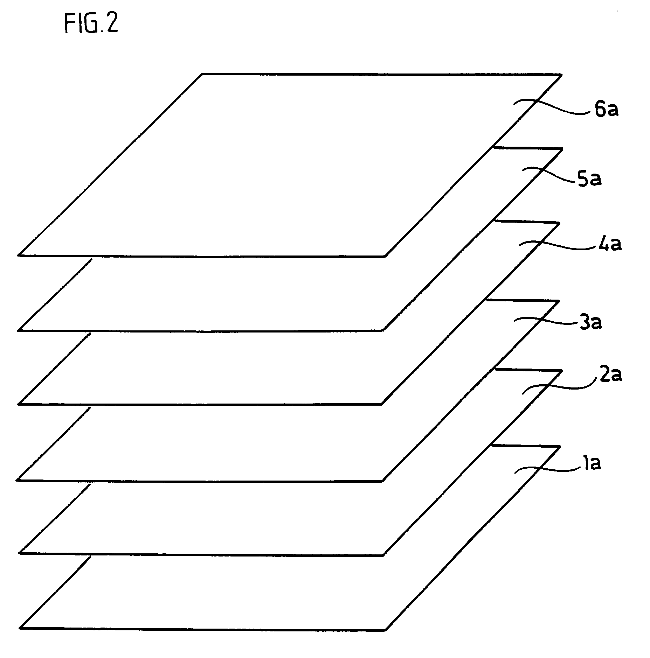

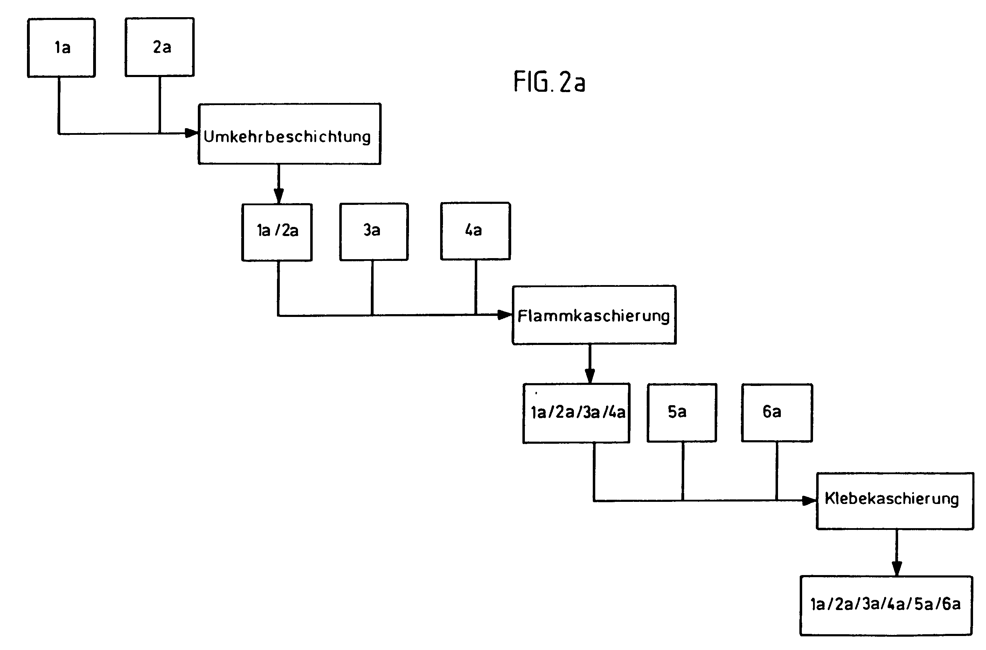

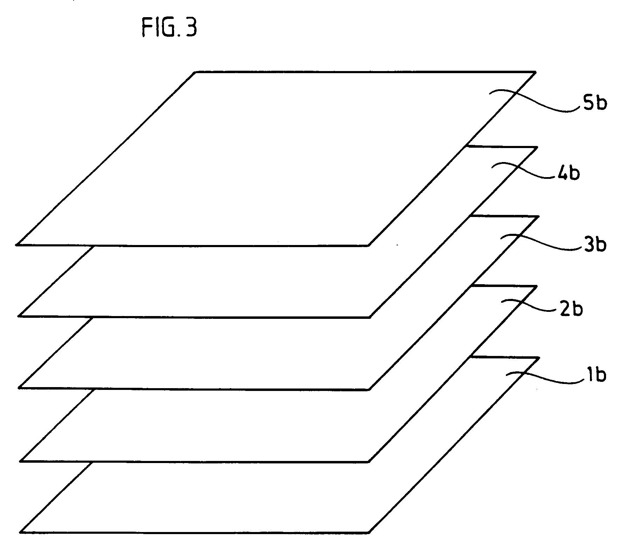

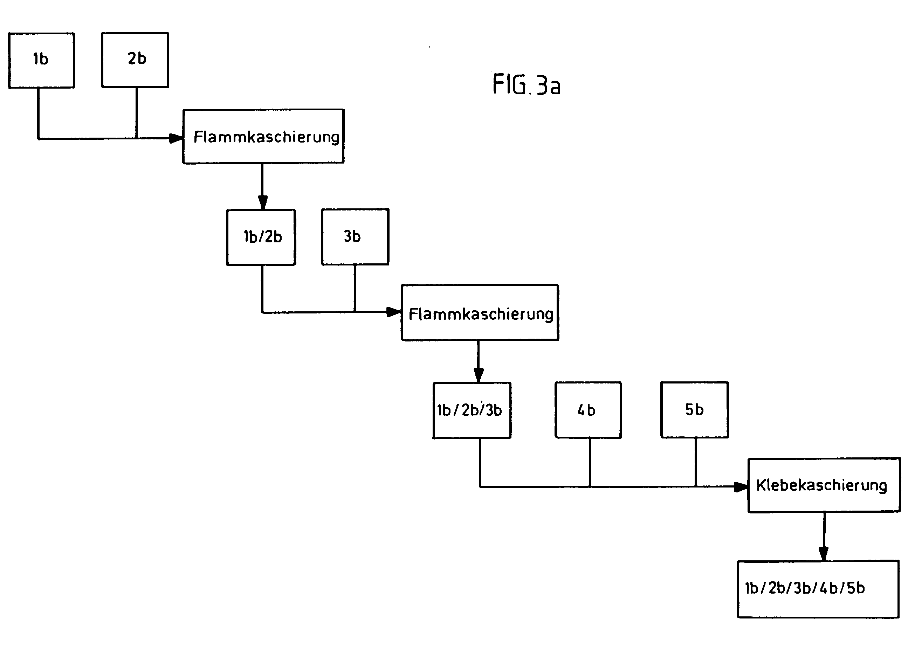

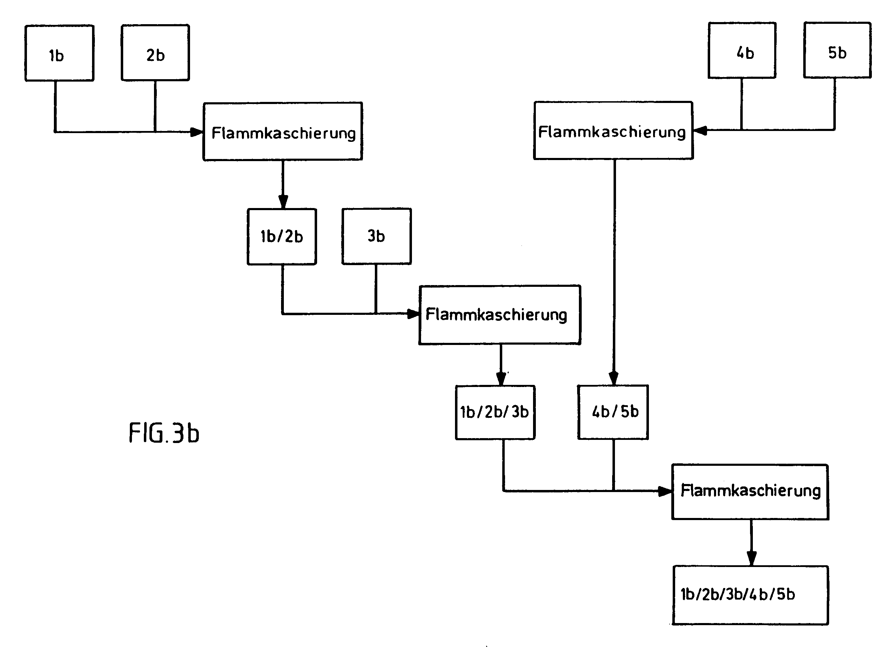

Die Figuren 2 und 3 zeigen Filtermaterialien, welche als einen Grundaufbau eine Kombination von drei Lagen umfaßt, nämlich einer Träger- oder Deckschicht, einer Weichschaumlage und einer Aktivkohlefasern beinhaltenden Flächenschicht. Dieser Grundaufbau wird in den Figuren 2 und 3 für zwei verschiedene Anwendungsfälle variiert, wie dies im folgenden beschrieben wird.

In Figur 2 ist ein sechslagiger Aufbau eines Filtermaterials dargestellt, das eine Trägerschicht 1a umfaßt, welche beispielsweise aus einem Polyester-Gewirke (Kettstuhlware) hergestellt sein kann und im vorliegenden Fall ein Flächengewicht von ca. 40 g/m² aufweist. Nachfolgend ist eine Membran 2a als zweite Lage auf der Basis von hydrophilem Polyurethan angeordnet, die mittels Umkehrbeschichtung mit einem Flächengewicht von ca. 40 g/m² auf die Trägerschicht 1a aufgetragen ist. Vorzugsweise wird hierfür Impraperm der Firma Bayer AG verwendet. Diese Membran 2a ist flüssigkeitsdicht bis über 700 mm Wassersäule.

Als dritte Lage wird im Flammkaschierverfahren eine Schaumstoffschicht 3a aufgebracht, welche aus Polyurethan, einem Polyurethan-Ether-Weichschaum oder einem Polyurethan-Ester-Weichschaum gebildet sein kann. Vorzugsweise wird hier ein Material mit einer Rohdichte von 42 kg/m³ verwendet. Die Stauchhärte dieses Materials beträgt 4,9 kPa, die Zahl der Zellen pro cm 17 ± 3. Die Dicke des Ausgangsmaterials beträgt bei diesem Beispiel 1,6 mm, die Einsatzdicke 0,3 mm. Vorzugsweise ist die dritte Lage flammhemmend ausgerüstet.

Als vierte Lage wird eine Flächenschicht 4a aus einem vollständig karbonisierten und aktivierten Viskose-Gewebe verwendet, in diesem Beispiel mit einem Flächengewicht von 120 g/m², eine Dicke von 0,45 mm und einer spezifischen inneren Oberfläche von 1000 bis 1200 m²/g.

Als fünfte Lage ist auf der Flächenschicht 4a eine Kleberschicht 5a in Form eines hydrophilen Kleberstrichs (Polyurethan-Basis) aufkaschiert, und zwar mit einem Flächengewicht von ca. 8 g/m². Als letzte Schicht in Form einer Deckschicht 6a wird ein Obergewebe aufgebracht, welches selbstverständlich auch durch eine gewirkte oder gestrickte textile Lage ersetzt werden kann. Im vorliegenden Beispiel wird ein Köpergewebe verwendet (65 % Viskose, 35 % Nomex) mit einem Flächengewicht von ca. 260 g/m².

Durch die Einbeziehung einer geeigneten Membran in den Aufbau des Filtermaterials können bei Gewährleistung einer ausreichenden Wasserdampfdurchlässigkeit die Schutzeigenschaften eines Schutzbekleidungssystemes aus dem beschriebenen Material gegenüber chemischen Schadstoffen erheblich verbessert werden, so daß ein Einsatz solcher Systeme auch für Zwecke möglich wird, die mit bisher bekannten permeablen Schutzbekleidungssystemen nicht abzudecken waren und deshalb allein mit isolierenden (z.B. gummierten) Schutzanzügen bewältigt werden mußten. Durch die Wasserdampfdurchlässigkeit der Membran können gegenüber isolierenden Schutzbekleidungssystemen die physiologischen Trageeigenschaften noch spürbar verbessert und somit längere Tragezeiten erreicht werden. Durch Verwendung des beschriebenen Materialaufbaus können derartige Schutzbekleidungssysteme, z.B. insbesondere auch für ABC-Abwehrpersonal (von Detektions-, Dekontaminationseinheiten, etc.) der Streitkräfte und im Zivilschutz sowie als Kampfbekleidung von Bordpersonal der Marine (Kampfanzug See mit integriertem ABC-Schutz), eingesetzt werden.

Besondere Bedeutung hat für das Aufkaschieren der Schaumstoffschichten das Flammkaschierverfahren, das gemäß der vorliegenden Erfindung erstmalig bei der Herstellung von Schutzmaterialien zur Herstellung von Bekleidung eingesetzt wird. Der Einsatz von Schaumstoffschichten als Klebeschichten wird wegen der oben beschriebenen Vorteile bevorzugt, die insbesondere im Zusammenhang mit dem Flammkaschierverfahren zum Tragen kommen.

Figur 2a zeigt ein bevorzugtes Herstellungsverfahren für das in Figur 2 gezeigte Produkt in Form eines Blockschemas.

Zunächst wird auf die Trägerlage 1a mit einem Umkehrbeschichtungsverfahren eine Membran 2a aus hydrophilem Polyurethan aufgetragen.

Diese modifizierte Trägerlage 1a/2a wird mit der Schaumstoffschicht 3a und der Flächenschicht 4a aus karbonisiertem Viskosegewebe in einem Verfahrensschritt zusammengeführt und in einem gemeinsamen Flammkaschierschritt miteinander verbunden. Das so erhaltene Mehrlagenmaterial 1a/2a/3a/4a wird mit einem hydrophilen Kleberstrich 5a versehen und mit der Deckschicht 6a zusammengeführt und in einem Klebekaschierschritt zum Produkt 1a/2a/3a/4a/5a/6a flächig verbunden.

Figur 3 zeigt einen andersgearteten Aufbau, bei dem auf eine Trägerschicht 1b, die ein Gewebe, Gestrick, Gewirk etc. sein kann, eine Polyurethan-Weichschaum-Schicht 2b (auf der Basis von Polyurethan-Ethern oder Polyurethan-Estern) aufgebracht ist. Auf diese Doppellage wird eine Flächenschicht 3b aufgebracht, welche Aktivkohlefasern enthält. Auf dieses dreilagige Material kann wiederum eine PU-Weichschaumschicht 4b und auf diese nachfolgend eine Deckschicht 5b aufkaschiert werden, oder aber die Schichten 4b und 5b werden bereits vorher durch einen Kaschiervorgang miteinander verbunden und dann als Doppellage auf die Dreifachlage aus den Lagen 1b, 2b und 3b aufkaschiert.

Der so geschaffene Materialaufbau gewährleistet die erforderliche hohe Schutzkapazität des Schutzbekleidungssystems gegenüber chemischen Schadstoffen bei gleichzeitiger weiterer erheblicher Verbesserung des Mikroklimas unter dem Schutzanzug. Durch die so erreichten erheblich günstigeren physiologischen Trageeigenschaften eignet sich das Material insbesondere für Schutzbekleidungssysteme, die
- bei Bedarf als über die normale Uniform zu tragende Schutzanzüge ("Overgarment"),
- als Heereskampfanzüge mit integriertem ABC-Schutz für klimatisch heiße Regionen bzw.
- als Schutzbekleidung im Zivil- und Bevölkerungsschutz o.ä.
verwendet werden können.

Durch die Möglichkeiten zur Variierung der einzelnen Materialschichten können im Rahmen des aufgezeigten Materialaufbaus sowohl universell einsetzbare als auch spezifischen Kundenbedürfnissen entsprechende Schutzbekleidungssysteme abgedeckt werden.

Vorstehend beschriebene Verfahrensführungen sind zusammengefaßt in Form von Blockdiagrammen in den Figuren 3a und 3b gezeigt.

Gemäß dem in Figur 3a gezeigten Verfahren wird zunächst die Trägerlage 1b aus einem Leinwandgewebe (65 % Viskose, 35 % Nomex) mit einem Flächengewicht von ca. 150 g/m² mit der offenporigen Schaumstoffkaschierschicht 2b (Polyurethan-Ethertype) mit einer Rohdichte von 42 kg/m³, einer Stauchhärte von 4,9 kPa, 17 ± 3 Zellen pro cm, einer Warendicke von 1,6 mm und einer Einsatzdicke von 0,3 mm in einem Flammkaschierschritt flächig verbunden.

Die flammkaschierte Trägerlage 1b/2b wird im folgenden Schritt mit der Flächenschicht 3b (100 % aktivierte Kohlenstoffasern) mit einem Flächengewicht von ca. 120 g/m², einer Dicke von 0,45 mm und einer inneren spezifischen Oberfläche von 1000 - 1200 m²/g zusammengeführt und flammkaschiert.

Die Dreifachlage 1b/2b/3b erhält auf seiten der Flächenschicht 3b eine Kleberbeschichtung 4b aus hydrophilem Polyurethan mit einem Flächengewicht von ca. 8 g/m² und wird dann mit der Deckschicht 5b zusammengeführt. Die Deckschicht besteht hier bevorzugt aus nicht gewobenem Material (Sontara-Spinnvlies) aus Nomex/Kevlar mit einem Flächengewicht von ca. 31 g/m². Diese aufeinanderliegenden Lagen werden miteinander in einem abschließenden Klebekaschierschritt flächig miteinander zum Endprodukt 1b/2b/3b/4b/5b verbunden.

Alternativ können gemäß der in Figur 3b gezeigten Verfahrensführung die Schichten 4b und 5b in einem Flammkaschierschritt zusammengeführt und verbunden werden. Das Material der Schicht oder Lage 4b ist in diesem Fall ein flammkaschierfähiger Schaumstoff, wie er bereits für die Lage 2b verwendet wurde. Danach wird die Dreifachlage 1b/2b/3b (vgl. Figur 3a) mit der Doppellage 4b/5b in einem vierten Flammkaschierschritt zum Produkt 1b/2b/3b/4b/5b verbunden.

## Patentansprüche

1. Mehrlagiges, textiles, gasdurchlässiges Filtermaterial gegen chemische Schadstoffe mit einer ersten Lage als textile Trägerschicht, mit einer mit der ersten Lage verbundenen zweiten Lage in Form einer Klebeschicht und mit einer auf der zweiten Lage aufgebrachten und mit dieser verbundenen dritten Lage, welche eine textile, aktivierte Kohlenstoffasern enthaltende Flächenschicht umfaßt, dadurch gekennzeichnet, daß die zweite Lage eine flächige Klebeschicht aus einem Klebefasergespinst, -vlies, -raster, einer Klebstoffolie, einem Klebstoffgewebe oder -gewirk oder einer auf die benachbarte(n) Lage(n) im Flammkaschierverfahren aufkaschierte offenporige Schaumstoffschicht ist und daß die zweite Lage mit der ersten und dritten Lage flächig verbunden ist.

2. Filtermaterial nach Anspruch 1, gekennzeichnet durch eine vierte Lage in Form einer flächigen Klebeschicht, welche auf der dritten Lage, gegenüberliegend zur zweiten, aufgebracht und flächig verbunden ist.

3. Filtermaterial nach Anspruch 2, dadurch gekennzeichnet, daß die die vierte Lage aus einem Klebefasergespinst, -vlies, -raster, einer Klebstoffolie, einem Klebstoffgewebe oder - gewirk gebildet ist.

4. Filtermaterial nach einem der Ansprüche 1 bis 3, dadurch gekennzeichnet, daß das Klebeschichtmaterial ein thermoplastischer Kunststoff, insbesondere Polyurethan, Polyvinylchlorid, Polyamid und/oder Polyester, ist.

5. Filtermaterial nach einem der Ansprüche 2 oder 4, dadurch gekennzeichnet, daß die vierte Lage eine auf die benachbarte(n) Lage(n) im Flammkaschierverfahren aufkaschierte offenporige Schaumstoffschicht ist.

6. Filtermaterial nach einem der Ansprüche 1 bis 5, dadurch gekennzeichnet, daß die textile Flächenschicht die aktivierten Kohlenstoffasern in einem Gemisch mit weiteren Fasern, insbesondere als Stapelfasern zu einem Mischgarn verarbeitet, umfaßt.

7. Filtermaterial nach einem der Ansprüche 1 bis 5, dadurch gekennzeichnet, daß die textile Flächenschicht im wesentlichen ausschließlich aus aktivierten Kunststoffasern besteht.

8. Filtermaterial nach einem der voranstehenden Ansprüche, dadurch gekennzeichnet, daß die textile Flächenschicht eine Gewebe-, eine Filz-, eine Gewirk-, eine Gestrick- oder eine Vliesstruktur aufweist.

9. Filtermaterial nach einem der Ansprüche 2 bis 8, dadurch gekennzeichnet, daß ferner eine fünfte Lage in Form eines mikroporösen, gasdurchlässigen, jedoch flüssigkeitsdichten Materials benachbart zur vierten Lage angeordnet und mit dieser gegebenenfalls flächig verbunden ist.

10. Filtermaterial nach einem der Ansprüche 2 bis 8, dadurch gekennzeichnet, daß ferner eine fünfte Lage in Form einer Membran auf der Basis von einem hydrophilen Polyurethanpolymeren, vorzugsweise mit einem Wasserdampfdurchgang von ≧ 2000 g/(m²·24 h), benachbart zur vierten Lage angeordnet und mit dieser flächig verbunden, gegebenenfalls auf diese im Umkehrbeschichtungsverfahren aufgetragen ist.

11. Filtermaterial nach einem der voranstehenden Ansprüche, dadurch gekennzeichnet, daß die textile Trägerschicht aus luftdurchlässigem, reißfestem und dimensionsstabilem Material hergestellt ist.

12. Filtermaterial nach Anspruch 11, dadurch gekennzeichnet, daß die textile Trägerschicht eine Reißfestigkeit von > 300 N aufweist.

13. Filtermaterial nach Anspruch 11 oder 12, dadurch gekennzeichnet, daß die textile Trägerschicht eine elastische Dehnung von < 12 % aufweist.

14. Filtermaterial nach einem der Ansprüche 11 bis 13, dadurch gekennzeichnet, daß die textile Trägerschicht ein Flächengewicht von 30 g/m² bis 150 g/m² aufweist.

15. Filtermaterial nach einem der voranstehenden Ansprüche, dadurch gekennzeichnet, daß die Gasdurchlässigkeit der textilen Trägerschicht 100 bis 500 l/(dm² · min) beträgt.

16. Filtermaterial nach einem der Ansprüche 1 bis 14, dadurch gekennzeichnet, daß die textile Trägerschicht ein Mikrofasergewebe ist.

17. Filtermaterial nach Anspruch 16, dadurch gekennzeichnet, daß die Gasdurchlässigkeit der textilen Trägerschicht 10 bis 30 l/(dm² · min) beträgt und daß die Trägerschicht bis zu einer Wassersäule von mindestens 500 mm, bevorzugt mindestens 1000 mm, wasserdicht ist.

18. Filtermaterial nach einem der Ansprüche 5 bis 17, dadurch gekennzeichnet, daß die Schaumstoffschicht im fertigen Filtermaterial eine Dicke von 0,3 mm bis 0,5 mm aufweist.

19. Filtermaterial nach einem der voranstehenden Ansprüche, dadurch gekennzeichnet, daß der Wärmeisolationswert der ersten, zweiten und dritten Lage des Filtermaterials zusammen ≦ 70·10³ m² K/W ist.

20. Filtermaterial nach einem der Ansprüche 5 bis 19, dadurch gekennzeichnet, daß auf die dritte Lage eine vierte Lage in Form einer, gegebenenfalls zweiten, offenporigen Schaumstoffschicht aufkaschiert ist.

21. Filtermaterial nach Anspruch 20, dadurch gekennzeichnet, daß die zweite Schaumstoffschicht zusammen mit einer zweiten textilen Lage aufkaschiert ist.

22. Filtermaterial nach Anspruch 20 oder 21, dadurch gekennzeichnet, daß die zweite textile Lage gleich oder verschieden von der ersten textilen Lage ausgebildet ist.

23. Filtermaterial nach einem der voranstehenden Ansprüche, dadurch gekennzeichnet, daß die erste und/oder die zweite Schaumstoffschicht wärmeverformbar ist/sind und eine selbsttragende Struktur des Filtermaterials bilden.

24. Filtereinsatz für Belüftungsanlagen von Kraftfahrzeugen, welcher ein Filtermaterial nach einem der Ansprüche 1 bis 23 aufweist.

25. Filtereinsatz nach Anspruch 24, dadurch gekennzeichnet, daß das Filtermaterial in einem Wärmeformschritt geformt ist.

26. Filtereinsatz nach Anspruch 25, dadurch gekennzeichnet, daß das Filtermaterial als selbsttragendes Bauteil ausgebildet ist.

27. Filtereinsatz nach Anspruch 26, dadurch gekennzeichnet, daß das Filtermaterial mit einer die Eigenstabilität verbessernden Struktur, insbesondere Rippen- oder Sickenstruktur, ausgebildet ist.

28. Schutzanzug, welcher ein Filtermaterial gemäß einem der Ansprüche 1 bis 23 als Schutzmaterial aufweist.

29. Schuheinlegesohle, welche ein Filtermaterial gemäß einem der Ansprüche 1 bis 23 aufweist.

30. Verwendung eines Filtermaterials gemäß einem der Ansprüche 1 bis 23 zur Herstellung von Filtern für die Frischluftzufuhr in Kraftfahrzeugen.

31. Verwendung eines Filtermaterials gemäß einem der Ansprüche 1 bis 23 als Schutzmaterial bei der Herstellung von Schutzanzügen für den zivilen und/oder militärischen Bereich.

## Claims

1. Multi-ply, textile, gas-permeable filter material for chemical pollutants, having a first ply as textile carrier layer, having a second ply, joined to the first ply, in the form of an adhesive layer and having a third ply which is applied to the second ply and joined to the latter and which comprises a textile planar layer containing activated carbon fibres, characterized in that the second ply is a two-dimensional adhesive layer composed of an adhesive-fibre spun material, an adhesive-fibre nonwoven, an adhesive-fibre screen, an adhesive sheet, an adhesive woven fabric or an adhesive knitted fabric or an open-pore foam layer laminated onto the adjacent ply(plies) in the flame laminating process and in that the second ply is two-dimensionally joined to the first and third ply.

2. Filter material according to Claim 1, characterized by a fourth ply in the form of a two-dimensional adhesive layer which is applied to the third ply opposite the second ply and is two-dimensionally joined to it.

3. Filter material according to Claim 2, characterized in that the fourth ply is formed from an adhesive-fibre spun material, adhesive-fibre nonwoven, adhesive-fibre screen, an adhesive sheet, an adhesive woven fabric or an adhesive knitted fabric.

4. Filter material according to one of Claims 1 to 3, characterized in that the adhesive-layer material is a thermoplastic polymer material, in particular polyurethane, polyvinyl chloride, polyamide and/or polyester.

5. Filter material according to one of Claims 2 or 4, characterized in that the fourth layer is an open-pore foam layer laminated onto the adjacent ply(s) in the flame laminating process.

6. Filter material according to one of Claims 1 to 5, characterized in that the textile planar layer comprises the activated carbon fibres in a mixture with further fibres, in particular processed as staple fibres to form a mixed yarn.

7. Filter material according to one of Claims 1 to 5, characterized in that the textile planar layer is essentially composed solely of activated synthetic material fibres.

8. Filter material according to one of the preceding claims, characterized in that the textile planar layer has a woven, a felt, a hosiery, a knitted or a fleece structure.

9. Filter material according to one of Claims 2 to 8, characterized in that, furthermore, a fifth ply in the form of a microporous, gas-permeable but liquid-tight material is disposed adjacently to the fourth ply and is optionally joined two-dimensionally to the latter.

10. Filter material according to one of Claims 2 to 8, characterized in that, furthermore, a fifth ply in the form of a membrane on the basis of a hydrophilic polyurethane polymer, preferably having a water vapour flow of ≧ 2000 g/(m².24 h), disposed adjacently to the fourth ply and joined two-dimensionally to the latter, is optionally applied to the fourth ply by the reversal coating method.

11. Filter material according to one of the preceding claims, characterized in that the textile carrier layer is produced from air-permeable, rupture-resistant and dimensionally stable material.

12. Filter material according to Claim 11, characterized in that the textile carrier layer has a rupture strength of > 300 N.

13. Filter material according to Claim 11 or 12, characterized in that the textile carrier layer has an elastic elongation of < 12%.

14. Filter material according to one of Claims 11 to 13, characterized in that the textile carrier layer has a weight per unit area of 30 g/m² to 150 g/m².

15. Filter material according to one of the preceding claims, characterized in that the gas permeability of the textile carrier layer is 100 to 500 l/(dm².min).

16. Filter material according to one of Claims 1 to 14, characterized in that the textile carrier layer is a microfibre fabric.

17. Filter material according to Claim 16, characterized in that the gas permeability of the textile carrier layer is 10 to 30 l/(dm².min) and in that the carrier layer is watertight up to a water column of at least 500 mm, preferably at least 1000 mm.

18. Filter material according to one of Claims 5 to 17, characterized in that the foam layer in the final filter material has a thickness of 0.3 mm to 0.5 mm.

19. Filter material according to one of the preceding claims, characterized in that the heat insulation value of the first, second and third ply of the filter material taken together is ≦ 70.10³ m² K/W.

20. Filter material according to one of Claims 5 to 19, characterized in that a fourth ply in the form of an optionally second, open-pore foam layer is laminated onto the third ply.

21. Filter material according to Claim 20, characterized in that the second foam layer is laminated on together with a second textile layer.

22. Filter material according to Claim 20 or 21, characterized in that the second textile layer is formed identically to, or differently from, the first textile layer.

23. Filter material according to one of the preceding claims, characterized in that the first and/or the second foam layer are/is heat-deformable and form a self-supporting structure of the filter material.

24. Filter insert for ventilation systems of motor vehicles, which has a filter material according to one of Claims 1 to 23.

25. Filter insert according to Claim 24, characterized in that the filter material is shaped in a heat shaping step.

26. Filter insert according to Claim 25, characterized in that the filter material is formed as self-supporting component.

27. Filter insert according to Claim 26, characterized in that the filter material is formed with a structure, in particular rib structure or crimp structure, which improves the inherent stability.

28. Protective suit, which has a filter material in accordance with one of Claims 1 to 23 as protective material.

29. Shoe insole, which has a filter material in accordance with one of Claims 1 to 23.

30. Use of a filter material in accordance with one of Claims 1 to 23 for producing filters for the fresh air supply in motor vehicles.

31. Use of a filter material in accordance with one of Claims 1 to 23 as protective material in the production of protective suits for the civilian and/or military sector.

## Revendications

1. Matériau filtrant multicouche, textile, perméable aux gaz, interdisant le passage des produits chimiques nocifs, comportant une première couche en tant que couche support textile, une deuxième couche liée à la première couche, sous forme de couche adhésive et une troisième couche déposée sur la deuxième couche, liée à cette dernière et qui comprend une couche superficielle textile contenant des fibres de carbone actif, caractérisé en ce que la deuxième couche est une couche adhésive plane composée d'un filé, d'un non-tissé, d'un réseau de fibres adhésives, d'une feuille adhésive, d'un tissu ou tricot adhésifs ou d'une couche de matière alvéolaire à pores ouverts, contrecollée sur la ou les couches voisines par un procédé de contrecollage à la flamme et en ce que la deuxième couche est liée par ses surfaces avec la première et la troisième couche.

2. Matériau filtrant selon la revendication 1, caractérisé par une quatrième couche ayant la forme d'une couche adhésive plane déposée sur la troisième couche à l'opposé de la deuxième et liée à celle-ci par sa surface.

3. Matériau filtrant selon la revendication 2, caractérisé en ce que la quatrième couche est formée par un filé, un non-tissé, un réseau de fibres adhésives, une feuille adhésive, un tissu ou un tricot adhésifs.

4. Matériau filtrant selon une des revendications 1 à 3, caractérisé en ce que le matériau de la couche adhésive est une matière thermoplastique, notamment polyuréthane, poly(chlorure de vinyle), polyamide et/ou polyester.

5. Matériau filtrant selon une des revendications 2 et 4, caractérisé en ce que la quatrième couche est une couche de matière alvéolaire à pores ouverts contrecollée sur la ou les couches voisines par un proeédé de contrecollage à la flamme.

6. Matériau filtrant sur une des revendications 1 à 5, caractérisé en ce que la couche superficielle textile comprend des fibres de carbone actif en mélange avec d'autres fibres, notamment réunies sous forme de fibres coupées en un fil mixte.

7. Matériau filtrant selon une des revendications 1 à 5, caractérisé en ce que la couche superficielle textile est composée sensiblement exclusivement de fibres synthétiques activées.

8. Matériau filtrant selon une des revendications précédentes, caractérisé en ce que la couche superficielle textile a une structure de tissu, de feutre, de tricot, de tulle ou de non-tissé.

9. Matériau filtrant selon une des revendications 2 à 8, caractérisé en ce qu'en outre une cinquième couche ayant la forme d'un matériau microporeux, perméable aux gaz, mais étanche aux liquides est disposée au voisinage de la quatrième couche et est liée le cas échéant par sa surface à cette dernière.

10. Matériau filtrant selon une des revendications 2 à 8, caractérisé en ce qu'en outre une cinquième couche ayant la forme d'une membrane à base d'un polymère hydrophile de polyuréthane, ayant de préférence une perméabilité à la vapeur d'eau ≧ à 2000 g/(m².24 h), disposée au voisinage de la quatrième couche et liée par sa surface à cette dernière, est déposée le cas échéant sur cette dernière par un procédé d'enduction inverse.

11. Matériau filtrant selon une des revendications précédentes, caractérisé en ce que la couche support textile est fabriquée en un matériau perméable à l'air, solide à la déchirure et de dimensions stables.

12. Matériau filtrant selon la revendication 11, caractérisé en ce que la couche support textile présente une solidité à la déchirure > 300 N.

13. Matériau filtrant selon la revendication 11 ou 12, caractérisé en ce que la couche support textile présente un allongement élastique < 12 %.

14. Matériau filtrant selon une des revendications 11 à 13, caractérisé en ce que la couche support textile a un grammage de 30 g/m² à 150 g/m².

15. Matériau filtrant selon une des revendications précédentes, caractérisé en ce que la perméabilité aux gaz de la couche support textile est de 100 à 500 l/(dm².min).

16. Matériau filtrant selon une des revendications 1 à 14, caractérisé en ce que la couche support textile est un tissu de microfibres.

17. Matériau filtrant selon la revendication 16, caractérisé en ce que la perméabilité aux gaz de la couche support textile est de 10 à 30 l/(dm².min) et que la couche support est étanche à l'eau jusqu'à une colonne d'eau d'au moins 500 mm, de préférence d'au moins 1 000 mm.

18. Matériau filtrant selon une des revendications 5 à 17, caractérisé en ce que la couche de matière alvéolaire dans le matériau filtrant fini a une épaisseur comprise entre 0,3 mm et 0,5 mm.

19. Matériau filtrant selon une des revendications précédentes, caractérisé en ce que la valeur d'isolation thermique de la première, la deuxième et la troisième couches du matériau filtrant est au total ≦ 70.10³ m² K/W.

20. Matériau filtrant selon une des revendications 5 à 19, caractérisé en ce qu'est contrecollée sur la troisième couche une quatrième couche ayant la forme d'une couche de matière alvéolaire à pores ouverts qui est le cas échéant la deuxième.

21. Matériau filtrant selon la revendication 20, caractérisé en ce qu'à la deuxième couche de matière alvéolaire est contrecollée une deuxième couche textile.

22. Matériau filtrant selon la revendication 20 ou 21, caractérisé en ce que la deuxième couche textile est identique ou différente de la première couche textile.

23. Matériau filtrant selon une des revendications précédentes, caractérisé en ce que la première et/ou la deuxième couche de matière alvéolaire est déformable à chaud et constitue une structure autoporteuse du matériau filtrant.

24. Cartouche filtrante pour installations de ventilation de véhicules, laquelle présente un matériau filtrant selon une des revendications 1 à 23.

25. Cartouche filtrante selon la revendication 24, caractérisée en ce que le matériau filtrant est formé au cours d'une étape de formage à chaud.

26. Cartouche filtrante selon la revendication 25, caractérisée en ce que le matériau filtrant est conçu en tant qu'élément de construction autoporteur.

27. Cartouche filtrante selon la revendication 26, caractérisée en ce que le matériau filtrant a une structure améliorant sa stabilité propre, notamment une structure à nervures ou moulures.

28. Vêtement protecteur présentant un matériau filtrant selon une des revendications 1 à 23 en tant que matériau protecteur.

29. Semelle comportant un matériau filtrant selon une des revendications 1 à 23.

30. Utilisation d'un matériau filtrant selon une des revendications 1 à 23 pour la fabrication de filtres pour les échangeurs d'air de véhicules.

31. Utilisation d'un matériau filtrant selon une des revendications 1 à 23 comme matériau protecteur lors de la fabrication de vêtements protecteurs à usage civil et/ou militaire.
